# EUROPEAN PATENT APPLICATION

(11) **EP 0 856 546 A1**
(43) Date of publication of application: **05.08.1998**
(21) Application number: 97200244.8
(22) Date of filing: 31.01.1997
(51) Int. Cl.: C08G 81/02, C08G 77/442, C08F 283/12

(54) **Branched polyolefins**

(71) Applicant: DSM N.V., 6411 TE Heerlen (NL)
(72) Inventor: Janssen, Koen Jan Gerarda, 3740 Bilzen (BE); Bruls, Wilhelmus Gerardus Marie, 6243 BE Meerssen (NL); Repin, Johannes Fredericus, 6441 KX Brunssum (NL)

(57) **Abstract**

The invention relates to a branched polyolefin polymer comprising a plurality of polyolefin arms with different monomeric compositions formed of polymers of 1-alkenes which are attached to a reactive polymeric backbone.
Such a polymer is highly suited as a compatibilizer for polyolefin blends; therefor the invention also relates to a compatibilized blend of polyolefins.

## Description

This invention relates to branched polyolefins, suitable as compatibilizer for polyolefins and particularly to branched polymers containing a polymeric backbone with branches extending therefrom in which the branches are formed of polyolefins. The invention relates also to compatibilized blends of polyolefins.

Since long it has been tried to make blends of different polymers for integrating the properties of those different polymers into a new product. Most polymers are not miscible on a molecular scale and mixing results in multiphase systems. As the surface tension between the components in such systems is generally high, the result is often a system wherein the dispersed phase is large in particle size and wherein the interfacial adhesion is thus poor.

Additives in the form of so-called compatibilizers have been developed in the art, aiming to reduce the surface tension and therewith improving the dispersion of one polymer phase into the other as well as the interfacial adhesion.

Although the art has produced several types of compatibilizers, there is still the need for improving the effeciency of compatibilizers. This is especially the case for situations wherein blends of polyolefins are to be compatibilized.

The state of the art is generally concerned with compatibilizing polar with non polar polymers, but even in the situation of two non-polar polymers (as polyolefins are) the miscibility is extremely difficult. This lack of miscibility is also present when polyolefinic copolymers (instead of polyolefinic homopolymers) are to be mixed. This is the case for instance with blends of polyethylene and polypropylene, and even with blends of different types of ethylene/α-olefin/diene copolymer rubbers with different monomer contents.

There is a need for a compatibilizer with improved effectiveness for these polyolefinic blends, the effectiveness being based on the effect of the compatibilizer per unit weight of the compatibilizer.

The concepts of the present invention reside in a branched polyolefin polymer, wherein a plurality of polyolefin arms with different monomeric compositions are linked to a polymeric backbone to provide a branched structure in which the properties of the branched structure can be conveniently tailored to the polymers to be compatibilized. Through the use of the polymeric backbone, it is possible to obtain branched polymeric structures in which branches or arms with different monomeric compositions can be provided on the polymeric backbone. The different arms having different monomeric compositions can be designed to fit with the polyolefins to be compatibilized. One type of arms is dedicated to interact with a first polyolefin in the blend, another type of arms is dedicated to interact with a second polyolefin in the blend. The compatibilizers of the present invention have relatively low viscosities compared to the absolute molecular weight.

Concepts of the present invention rely on chemical reactions which afford the coupling or linking together of polyolefin pre-arms of different monomeric composition to effective compatibilizers. Branched polymer compositions of the present invention result from either a coupling reaction between a reactive polymeric backbone containing functionality capable of reaction with polyolefin pre-arms with a different monomeric composition or a polymerization reaction between polyolefin pre-arms with a different monomeric composition derivatized for such polymerization reactions. By polyolefin pre-arm is meant a polyolefin polymer derivatized, preferably at its terminus, so that it can react with a functional polymer or a difunctional polymerizable monomer. Derivatized as used herein likewise includes polyolefin polymers having (terminal) unsaturation, that is, the polymer contains a carbon-to-carbon double bound, C = C. Use of a polyolefin pre-arm allows for control of the polyolefin composition independently of the reaction to form the branched polyolefin.

Reactive polymers useful as backbones are preformed polymers with a selectable number of functional groups or chemically reactive sites that will couple with the above mentioned polyolefin pre-arms. Alternatively, the backbone is formed by a polymerization reaction using different polyolefin pre-arms first derivatized with a difunctional polymerizable monomer, either alone or in combination with another monomer copolymerizable therewith. Selective use of the polymeric backbone allows one to control the distribution of the different polyolefin arms, thus controlling the degree of branching (number of arms) and the type of branchings.

One of the advantages of the branched polymers of the present invention is the ability to provide a branched polymer structure that is achieved in part through the use, as the polymeric backbone, of a polymeric backbone structure. Polymeric backbones in the practice of this invention are preformed polymers having a known or selectable number of functional groups or chemically reactive sites that can be used to couple with the different polyolefin pre-arms. Reactive polymeric structures useful as backbones are polymers possessing functionality which is either (a) capable of directly reacting with an unsaturation contained in the different polyolefin pre-arms or (b) capable of undergoing coupling reactions with the different polyolefin pre-arms that have been derivatized for a compatible reaction with the functional group on the reactive polymeric backbone. The reactive polymers provide a large numbers of coupling sites by which a large number of different polyolefin pre-arms can be linked to the polymeric backbone to thus enable control of both the extent of branching and the type of branched structure.

Branched polymers of the present invention have different polyolefin arms or branches comprised of different polymers of 1-alkenes, and preferably predominately ethylene and/or other 1-alkenes with 3 to 20 carbon atoms.

In the preferred practice of the present invention, the different polyolefin pre-arms preferably contain, prior to derivatization or coupling with a reactive polymer or a difunctional polymerizable monomer, terminal unsaturation. That unsaturation is either vinyl, vinylidene, or vinylene unsaturation. Terminal unsaturation is preferred in order to reduce the steric effects resulting from reaction between two polymeric molecules. Where ever in the following the text refers to "terminal", the same teaching holds for polyolefin pre-arms, which have a functionality in the polymeric main chain, or in a (monomeric or polymeric) side chain.

Polyolefin pre-arms can be derivatized for reaction with a reactive polymeric backbone or a difunctional monomer by many types of chemical reactions. Convenient examples of functional groups introduced to the different polyolefin pre-arms to effect coupling include, but are not limited to carbon-to-carbon unsaturation in the form of vinyl, vinylidene and vinylene bonds, hydroxy, amino, peroxy, carboxylic acid, ester, halide, anhydride, organoboron, cyano, isocyanato, carbon-carbon unsaturation that is polymerizable, thio, epoxy or aldehyde. Such derivatization methods will be presented in more detail as specific embodiments are defined.

Reactive polymer structures useful as backbones in the practice of this invention are very broad. Examples include, but are not limited to the following classes: homo and copolymers of polyhydrosilanes, polyacrylic and methacrylic acids, polyacrylates, polymethacrylates, polyvinyl alcohol, polyvinyl acetate, poly(vinyl acetals), poly(vinyl ketals), ethylene copolymers with ethylenically unsaturated carboxylic acids, esters, or anhydrides, styrene copolymers with ethylenically unsaturated carboxylic acids, esters, or anhydrides, polythiols, polyepoxides, poly or extended isocyanates.

Use of a preformed reactive polymer as the backbone generally leads to a branched structure characterizable basically as a comb, depending to a significant degree on the molecular weight of the reactive polymeric backbone and the polyolefin pre-arms. Comb branched polymers are those wherein the polymeric backbone is essentially linear and the different polyolefin arms extend pendant from that linear backbone. Thus, polyhydrosilanes, polymethacrylates, and ethylene copolymers are typical examples of reactive polymeric backbones that will provide a comb structure.

In an alternative embodiment, the polymeric backbone is formed via a polymerization reaction between polymerizable monomers and the different polyolefin pre-arms that have been first derivatized with a difunctional polymerizable monomer leaving a polymerizable group capable of undergoing such polymerization reactions. Branched polymers thus formed will generally also have comb structures.

The difunctional polymerizable monomer as used herein is a monomer possessing functionality that can selectively react with the terminal unsaturation or other terminal functionality of the different polyolefin pre-arms, and possess other secondary functionality, reactive via a standard polymerization techniques such as cationic, anionic, free radical, Ziegler-Natta, etc., as a secondary reaction. Difunctional polymerizable monomers can be selected from the group comprising hydroalkoxysilanes, hydrohalosilanes, acrylic or methacrylic acids, their esters, amides, acid halides or anhydrides, vinyl ace-tate, vinyl alcohols, vinyl amines, vinylcyano compounds, vinyl isocyanates, vinyl thiols, vinyl epoxy compounds, etc.

The different polyolefin pre-arms which can be used in the practice of the present invention depend in large measure on the properties desired in the branched polymer. In most embodiments, it is generally preferred, that the different polyolefin pre-arms be formed of a polyolefin containing terminal unsaturation in the form of either vinyl, vinylidene, vinylene, or mixtures thereof. Use can be made of different polyolefin homopolymers, such as polyethylene, polypropylene, polystyrene and analogs thereof; preference is given to the use of a mixture of polyethylene as well as polypropylene arms. It is also possible, and sometimes preferred, to employ different copolymers of one or more 1-alkenes or to employ different copolymers of one or more 1-alkenes with other unsaturated monomers copolymerizable therewith. In general, use is made of different polyolefin prearms formed by copolymerization of ethylene with at least one other 1-alkene. In addition, it is also possible to use, in combination with one or more of the monomers described above, one or more polyenes.

The different polyolefin pre-arms used in the practice of the present invention also refer to and include copolymers of 1-alkenes generally, and preferably ethylene/ propylene copolymers or copolymers of ethylene and propylene with other 1-alkenes, as well as copolymers formed by the interpolymerization of ethylene, 1-alkenes and at least one other polyene monomer. Such polymers are themselves well known to those skilled in the art and are typically prepared by using conventional Ziegler or metallocene polymerization techniques well known to those skilled in the art. Both types of polymers hereinafter collectively are referred to as EP(D)M.

As will be appreciated by those skilled in the art, while propylene is a preferred monomer for copolymerization with ethylene and optionally a diene monomer, it will be understood that in place of propylene, use can be made of other 1-alkenes containing 4 to 20 carbon atoms. The use of such higher 1-alkenes together with or in place of propylene are well known to those skilled in the art and include, particularly, 1-butene, 1-pentene, 1-hexene and 1-octene.

When using an interpolymer of ethylene, 1-alkene and a polyene monomer, use can be made of a variety of polyene monomers known to those skilled in the art containing two or more carbon-to-carbon double bonds containing 4 to 20 carbon atoms, including non-cyclic polyene monomers, monocyclic polyene monomers and polycyclic polyene monomers. Representative of such compounds include 1,4-hexadiene, dicyclopentadiene, bicyclo(2,2,1)hepta-2,5-diene, commonly known as norbornadiene, as well as the alkenyl norbornenes wherein the alkenyl group contains 1 to 20 carbon atoms and preferably 1 to 12 carbon atoms. Examples of some of the latter compounds includes 5-methylene-2-norbornene, 5-ethylidene-2-norbornene, vinyl norbornene as well as alkyl norbornadienes.

In a particular practice of the present invention, the different polyolefin pre-arms are produced using metallocene catalysts. As used herein, the term "metallocene catalyst system" refers to and includes the use of a transition metal compound comprising a metal from groups 3-6 of the Periodic Table such as titanium, zirconium, chromium, hafnium, yttrium containing at least one coordinating ligand that is a highly conjugated organic compound (e.g., cyclopentadienyl or indenyl). Such catalyst systems are themselves known and are described in the following published applications, the disclosures of which are incorporated herein by reference: EP-A-347,129; EP-A-69,951; EP-A-468,537; EP-A-500,944; and PCT/NL/93/00229. In addition, other Ziegler catalyst systems likewise known in the art as producing terminal unsaturation can likewise be used in the practice of this invention. One such example is titanium chloride supported on magnesium chloride and used in high temperature (greater than 100°C) polymerization systems. Another example is the copolymerization of ethylene with higher 1-alkenes using VOCl₃ and diethylaluminum chloride. Also the process as disclosed in WO 96/23010 is suitable. In general, the choice of catalyst system and polymerization conditions will depend on the specific type of polyolefin pre-arms desired, as known to those skilled in the art of olefin polymerization technology. Thus, the composition of the pre-arms are dependent on the limits of the polymerization technology and can be controlled independent of the composition of the backbone.

Because the concepts of the present invention make it possible to introduce in a controlling fashion large numbers of different polyolefin pre-arms, the properties of the polyolefin arms linked to the polymeric backbone dominate the properties of the resulting compatibilizer. Thus, the molecular weight of the polyolefin pre-arms can be varied to control the properties desired in the overall branched polymer. Similarly, the method of preparation of the pre-arms can be used to, in part, control the properties of the arms. In general, the lengths of the pre-arms, expressed as the number-average molecular weight, Mₙ, can be varied within broad limits, depending on the properties desired. As a general rule, use is made of polymer pre-arms having a Mₙ between 200 and 100,000, and preferably between 1000 and 80,000 (g/mol). It is generally preferred that the molecular weight distribution (MWD) of the pre-arms be controlled to a level of at least 1.0, referring to the ratio between the weight-average molecular weight (M_{w}) and the number-average molecular weight (Mₙ), as determined by size exclusion chromatograph-differential viscometry (SEC-DV). Preferred pre-arms used in the practice of the present invention have a MWD of at least 1.2 ranging up to 3.5.

The chemical reactions employed in the practice of this invention to couple the different polyolefin pre-arms with the reactive polymer are generally known. Reaction times will generally be much longer in the practice of this invention than that practiced for the same chemical reaction with conventional monomeric chemicals.

As will be appreciated by those skilled in the art, as the molecular weight of the polyolefin pre-arms to be coupled with the backbone increases the number of (terminal) double bonds in the polyolefin pre-arms decreases on a weight basis. That in turn results in a reduction of the coupling efficiency of the polyolefin pre-arms to the polymeric backbone. Thus, longer reaction times are required to produce the branched polymer of the invention. Similarly, steric factors can play a role in reducing the coupling efficiency, making it more difficult to couple the polyolefin pre-arms to adjacent functional groups in the backbone.

In short, the greater the molecular weight of the different polyolefin pre-arms to be coupled with the backbone, the greater is the reaction time in affecting that coupling and the less complete is the substitution of the polyolefin pre-arms on the functional groups of the backbone.

The number, in the backbone, of repeating units with functionality capable of being coupled to a plurality of different polyolefin pre-arms depends, to some degree, also on the intended application as a compatibilizer. As a general rule, it is preferred that the reactive polymeric backbone contains at least 10 functional groups through which different polyolefin arms can be linked to form a branched structure. In the preferred practice of the invention, it is often desirable to employ a reactive polymeric backbone having the capability of forming at least 4 to 300 polyolefin arms linked to the polymeric backbone.

While it is generally preferred, as indicated above, that the reactive polymer backbones contain at least 10 functional groups through which the polyolefin pre-arms can be coupled, it is necessary in most embodiments that the reactive polymeric backbone contains at least ten functional groups. That is so because, in most of the embodiments of this invention, the reaction to couple the polyolefin pre-arms to the reactive polymeric backbone is not quantitative with respect to utilization of backbone functionality. As explained above, the molecular weight of the polyolefin pre-arms can reduce the coupling efficiency of high molecular weight polyolefin pre-arms to the reactive polymeric backbone; that effect is often reinforced by steric factors associated with the coupling site on the reactive polymeric backbone and can prevent, with higher molecular weight polyolefin pre-arms the coupling of polyolefin pre-arms to immediately adjacent functional groups in the polymeric backbone. In those embodiments in which it is possible to couple lower molecular weight polyolefin pre-arms, the coupling reaction will proceed in a quantitative or substantially quantitative manner, and branched polymers can be produced with the use of only 6 to 10 functional groups in the reactive polymeric backbone.

The choice of reactive polymeric backbone and specific functionalized polyolefin pre-arms is dependent on the intended end use of the branched polymer as a compatibilizer. Pre-arms and reactive polymeric backbones are chosen so that the chemical bond coupling them will be stable under the conditions of intended use.

One suitable and preferred class of polymeric backbones used in the practice of the present invention are polyhydrosilane polymers and copolymers containing a large number of repeating units containing a silicon-hydrogen bond. In general, it is preferred to use silicon-containing polymers having repeating units of the general formula: 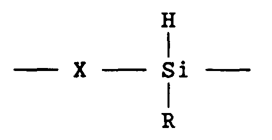 wherein X is a group containing a heteroatom, such as P, O, S, N, Si or one or more carbon atoms either as part of an aliphatic or aromatic group and R is hydrogen or an organic group, and preferably hydrogen, alkyl, aryl, cycloalkyl, alkoxy, aryloxy or cycloalkoxy.

Illustrative are polyhydrosiloxanes derived from an alkylhydrosiloxane end-capped with either a hydrosilane functionality or an alkylsilane functionality. Such polyhydrosiloxanes have the general formula: 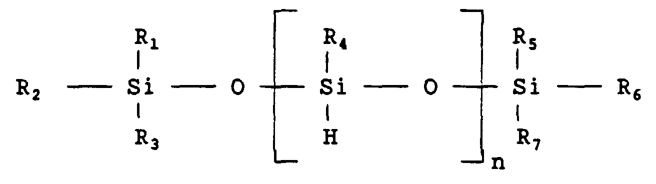 wherein R₁ to R₇ is each independently hydrogen or an organic group; preferably, R₁, R₂ and R₃ can be either hydrogen, alkyl, aryl, cycloalkyl, alkoxy, aryloxy or cycloalkoxy; R₄ is hydrogen, alkyl, aryl, cycloalkyl, alkoxy, aryloxy or cycloalkoxy; R₅ and R₆ are alkyl, aryl, cycloalkyl, alkoxy, aryloxy or cycloalkoxy and R₇ is hydrogen, alkyl, aryl, cycloalkyl, alkoxy, aryloxy or cycloalkoxy; n is an integer having a minimum value of about 10, and preferably 25 or higher. Such polyhydrosiloxanes, as is well-known to those skilled in the art, are commonly available from a number of companies including Dow Corning and Rhone Poulenc.

As will be appreciated by those skilled in the art, it is likewise possible to employ in place of the polyhydrosiloxanes described above, the corresponding analogs thereof in which at least part of the oxygen atoms is replaced by sulfur or nitrogen atoms.

Representative of suitable polyhydrosilane polymers are polymethylhydrosilane, polymethylhydrosiloxane (PMHS), methylhydrodimethylsiloxane copolymer, methylhydrophenyl-methylsiloxane copolymer, methylhydrocyanopropylsiloxane copolymer, methylhydromethyloctyl-siloxane copolymer, poly(1,2-dimethylhydrosilazane), (1-methylhydrosilazane)(1,2-dimethylhydrosilazane) copolymer and methylhydrocyclosiloxane polymer (a cyclic reactive polymeric backbone).

In general, use is made of silicon-containing polymer backbone having a number average molecular weight of 300 or higher, and preferably 300 to 10,000 (g/mol).

In accordance with a preferred embodiment of the invention, the different pre-arms can be linked to the silicon-containing reactive polymeric backbone described above by reacting its (terminal) unsaturation with the Si-H bond present in repeating units in the polyhydrosilane backbone. As is well known to those skilled in the art, the reaction between the (terminal) unsaturation of the different pre-arms and the Si-H bond of the polyhydrosilane can be carried out under conditions of heat. It is generally preferred to carry out the reaction (hydrosilylation) under the influence of a suitable catalyst to effect addition of the silicon hydride to the (terminal) unsaturation of the different olefin pre-arms to link the pre-arms to the silicon-containing reactive polymeric backbone. Suitable hydrosilylation catalysts to effect that reaction are known in the art and include metals from groups 8 to 10 of the Periodic Table of the Elements, (in Handbook of Chemistry and Physics 70th edition, CRC press, 1989-90), including catalysts based on palladium, platinum or nickel. Catalysts which have been found to be particularly effective are H₂PtCl₆·xH₂O(x≥O), K[Pt(C₂H₄)Cl₃], RhCl(PPh₃)₃ or Co₂(CO)₈. Such catalysts are described in USP 5,486,637.

The hydrosilylation reaction can be carried out in accordance with a variety of reaction conditions as described in the art. It is generally possible, and sometimes desirable, to carry out the reaction in the presence of a solvent such as aliphatic hydrocarbons (such as pentane, hexane, heptane, pentamethylheptane or distillation fractions); aromatic hydrocarbons (such as benzene or toluene); halogenated derivatives of aliphatic or aromatic hydrocarbons (such as tetrachloroethylene) or ethers (such as tetrahydrofuran or dioxane). The relative properties of the different pre-arms, the ratio between the different pre-arms and the polyhydrosilane are controlled to ensure that the desired number of different polyolefin pre-arms become linked by the addition reaction to the polymeric backbone. The solution reaction is generally carried out at a concentration of 2 to 50 weight percent of polymeric reactant. The polymeric reactants are ratioed according to the moles of (terminal) unsaturation (C=C) in the different polyolefin pre-arms to the moles of Si-H bonds in the polyhydrosilane. Because the coupling of the polyolefin pre-arms to the hydrosilane groups present in the backbone controls the number of arms linked to the backbone, a molar excess of the different polyolefin pre-arms in total ensures the maximum number of polyolefin arms linked to the polymer backbone. In general, mole ratios ranging from 1:100 to 10:1 of the polyolefin pre-arms per mole of hydrosilane group is employed. The weight ratio between the amount of the different pre-arms generally lies between 10:90 and 90:10; more preferred between 25:75 and 75:25. The skilled man can easily determine the optimum ratio's of the different arms, based on the intended use as compatibilizer in a polyolefin blend.

The reaction temperature is not a critical variable, and depends somewhat on the reactants used in carrying out the coupling reaction. Preferably temperatures ranging from 15 to 300°C, and more preferably between 70 and 240°C are used for that purpose. Similarly, the reaction time is likewise not critical and depends on the reactants employed. As a general rule, reaction times are those sufficient to couple the polyolefin pre-arms to the polymer backbone, and generally range from 10 seconds up to 300 hours.

As will be appreciated by those skilled in the art, the foregoing reaction generates a mixture of products, depending on the structure of the polymer backbone and the structure of the polyolefin pre-arms. Nonetheless, one of the principal reactions which proceeds is the addition of the hydrosilane group to the (terminal) unsaturation of the polyolefin pre-arms. For example, those pre-arms containing terminal vinylidene unsaturation react according to the following equation: 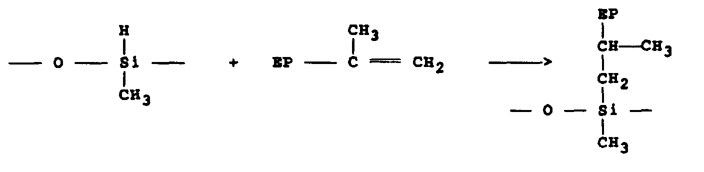 while terminal vinyl unsaturation proceeds according to the following equation: 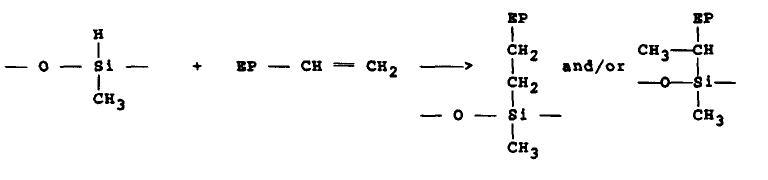 wherein EP represents the remainder of each polyolefin pre-arm. The branched polymer of the present invention has, of its nature, at least two different EP-arms in its molecule. This is also the case in the rest of this specification.

In accordance with one variation on this embodiment of the invention, it is also possible to produce branched polymers of the same type by a different route in which polyolefin pre-arms are reacted with a difunctional polymerizable monomer in the form of a monomeric hydrosilane compound containing a Si-H group, which is then either homopolymerized or copolymerized with other silicon-containing compounds in a conventional manner. This concept of the invention thus involves the coupling of different polyolefin pre-arms with a monomeric hydrosilane having the structure: 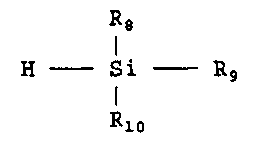 wherein R₈ and R₉ are each a hydrolyzable group such as a halogen atom and preferably chlorine or a lower alkoxy group containing 1 to 6 carbon atoms and R₁₀ is a hydrolyzable group as described above or hydrogen, alkyl, aryl or cycloalkyl.

Thus, the reaction, when the polyolefin pre-arms contain vinylidene terminal unsaturation, proceeds as follows: 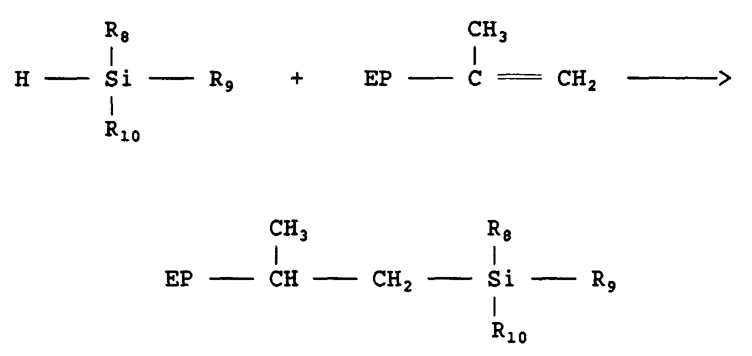 The resulting silane-terminated polyolefin can then be reacted, typically in the presence of water, to homopolymerize the silane and form the corresponding branched polymer containing polyolefin arms and a silane polymer backbone.

It is also possible to copolymerize, with the polyolefin-substituted silane, other hydrolyzable silanes to form a silane copolymer backbone, the units of which contain polyolefin arms emanating therefrom along with repeating units from the other hydrolyzable silanes which have been copolymerized therewith. For example, it is possible to copolymerize a polyolefin-substituted silane illustrated above with, for example, dimethyldichlorosilane in which some of the repeating units of the polymer backbone contain polyolefin arms emanating therefrom while others derived from the dimethyldichlorosilane contain methyl groups appended to the silicon atom.

The conditions under which the polyolefin pre-arm is reacted with the hydrosilane monomer are like those described above for reaction between the polyolefin pre-arm and the polyhydrosilane.

In accordance with another concept of the present invention, it is possible to utilize other chemical reactions or coupling techniques to link the different polyolefin pre-arms to a reactive polymer. In accordance with one embodiment, it is possible to employ, as the reactive polymeric backbone, polymers of acrylic and methacrylic acid either as a homopolymer or copolymerized with other acrylic and/or methacrylic type monomers. The acrylic and methacrylic polymers used in this embodiment of the invention are those derived from the monomers having the structure: 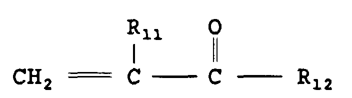 wherein R₁₁ is either hydrogen or lower alkyl (C₁-C₁₂, e.g., methyl) and R₁₂ is an OH group, a halogen group and preferably chlorine, an alkoxy group, or an aryloxy group. Representative of such compounds include acrylic acid, methacrylic acid, acrylyl chloride and methacrylyl chloride along with various esters of either acrylic or methacrylic acid including the alkyl and aryl ester derivatives of the two acids. As a comonomer, use can be made of amino or hydroxyalkyl acrylates and methacrylates. It is sometimes desirable to employ, when using the ester, an ester leaving group to facilitate transesterification with a functionalized polyolefin pre-arm as will be described more fully hereinafter. Suitable ester-leaving groups are well known to those skilled in the art, and include tosylates and mesylates as examples.

The polyacrylic or polymethacrylic backbone embodied in the practice of the present invention should have a molecular weight sufficient to provide at least 10 and preferably at least 25 acid, acid chloride or ester groups in each backbone polymer chain. Such polymers have molecular weights Mₙ typically ranging from 1,000 to 40,000 (g/mol).

The coupling of the different polyolefin pre-arms to the acid, acid chloride or ester functionality of the reactive polymeric backbone can be achieved by first functionalizing the polyolefin pre-arms prepared as described above to introduce a terminal amine group or a terminal hydroxy group, each of which is capable of undergoing reaction with the functional group contained in the polyacrylic or polymethacrylic backbone. Preferably, the different hydroxy terminal polyolefin pre-arms are converted to a lithium alkoxide by reaction with n-butyllithium, followed by reaction with acrylyl chloride or methacrylyl chloride.

One such technique for converting the terminal unsaturation of the different polyolefin pre-arms to an amine or a hydroxy compound is by hydroboration. In that technique, a hydroboration reagent is added across the terminal double bond of the polyolefin pre-arms to form organoborane derivatives which can then be converted to the corresponding hydroxy compounds using alkaline hydrogen peroxide or to the corresponding amine using an ammonium hydroxide/sodium hypochlorite mixture. Those reactions can be illustrated by means of the following equation: 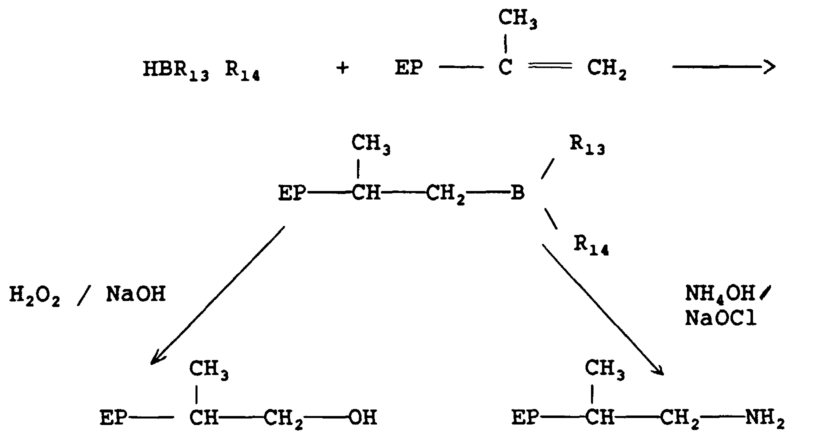 wherein R₁₃ and R₁₄ are each hydrogen and/or organic groups bonded to the boron in the hydroboration reagent. A number of such hydroboration agents are well known to those skilled in the art and can be found and their utility described in H.C. Brown, "Organic Synthesis Via Boranes" Wiley 1975. One such hydroboration reagent which can be effectively used in the practice of the present invention is 9-boronbicyclo[3.3.1]nonane [9-BBN].

Once converted to the corresponding hydroxy or amine terminated polyolefin pre-arms, these different pre-arms can then be reacted with the polyacrylic or polymethacrylic backbone in accordance with conventional techniques by which the functional group of the reactive polymer, a carboxylic acid group, an acid chloride group or an ester group reacts with the different polyolefin pre-arms in the form of a hydroxy terminated compound to form the corresponding ester polyolefin arms linked to the acrylic or methacrylic polymer backbone. Similarly, the same functional groups react with amine terminated polyolefin pre-arms to form the corresponding amide, thereby linking the different polyolefin arms to the polymer backbone. Conventional esterification and amidation reaction conditions, generally in solvent, may be used to effect that coupling reaction.

Instead of using, as the polymer backbone, homopolymers of acrylic or methacrylic acid, acid chlorides or esters, use can be made, in accordance with another embodiment of the invention, of copolymers of the foregoing acrylic or methacrylic acids, acid chlorides or acid esters. Such copolymers are formed from one or more polymerizable ethylenically unsaturated monomers capable of undergoing an anionic or free radical polymerization. Preferred among comonomers with such acrylic and methacrylic monomers as described above are ethylene and lower 1-alkene such as propylene and 1-butene, styrene and styrene derivatives such as alpha methylstyrene, vinyl ethers and vinyl cyano compounds such as acrylonitrile and methacrylonitrile. Other comonomers useful in the practice of this invention as copolymerizable with the acrylate and methacrylate monomers include unsaturated diacids, diesters, anhydrides such as fumaric, itaconic, maleic, a broad range of vinyl monomers such as vinyl acetate, vinyl imidizole, vinyl pyridine, methyl vinyl ketone, allyl glycidyl ether, and acrylamide. The amount of one or more of the foregoing comonomers is not critical and can be varied within relatively wide ranges. In general, use can be made of 20 to 80 percent of the acrylic or methacrylic monomer and 80 to 20 percent of one or more of the foregoing comonomers. Once again, it is preferred to employ, as the polymer backbone, copolymers having molecular weights (Mₙ) ranging from 1,000 to 40,000 (g/mol).

As will be appreciated by those skilled in the art, the different polyolefin pre-arms can be coupled to such copolymers in the same manner as they are coupled to the acrylic and methacrylic homopolymers as described above. In either case, use is made of a molar ratio of the functional polyolefin pre-arms to acid, acid chloride or ester functionality or the reactive polymeric backbone to ensure the desired number of arms coupled to the backbone; this ratio is in the range of 1:100 to 10:1.

Branched polymers of the foregoing types can also be prepared by the alternate route in which different terminal amine, hydroxy, or lithium alkoxy functional polyolefin pre-arms are first reacted with a difunctional polymerizable monomer. In this embodiment, it is convenient to use an acrylic or methacrylic monomer to couple the different polyolefin pre-arms through either an ester or amide coupling linkage. Once coupling of the polyolefin pre-arms is accomplished, the resulting coupled monomer can then be subjected to conventional free radical or anionic polymerization either alone or in combination with one of the foregoing comonomers to form the corresponding polymers with different polyolefin arms emanating from the repeating units derived from the acrylic or methacrylic monomer. Once again, the reaction techniques for effecting that polymerization reaction are conventional and can be found in the literature describing conditions to effect free radical and anionic polymerization of acrylic and methacrylic monomers. See, for example, the Encyclopedia Of Polymer Science & Engineering, (1988), John Wiley & Sons, Inc., Vol. 13, pp. 1702-1867 and Vol. 1, pp. 221-224, 235-251 (Bamford).

In accordance with another embodiment of the invention, use can also be made of a reactive polymer in the form of copolymers of maleic anhydride and ethylene or copolymers of maleic anhydride, ethylene and one or more of a lower alpha-olefins such as propylene and 1-butene or styrene. In accordance with this concept of the invention, use can be made of copolymers containing 85 percent to 95 percent of ethylene and 15 percent to 5 percent of maleic anhydride. The different polyolefin pre-arms, which have been functionalized to introduce either a hydroxy or an amine group can thus be coupled to the ethylene/maleic anhydride copolymer by means of ester and/or amide linkages. Alternatively, when using polyolefins functionalized with an amine, it is also possible to couple the different polyolefin pre-arms to the ethylene maleic/anhydride copolymer backbone by means of imide linkages. The reaction of an amine-functionalized polyolefin pre-arm with an ethylene/maleic anhydride copolymer to form the corresponding imide may be represented by the following equation: 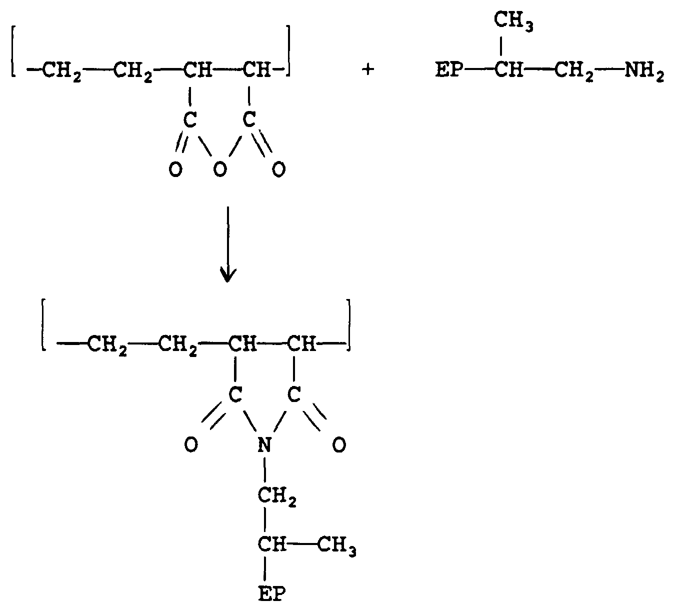 Once again, the reaction conditions for coupling hydroxy or amine functionalized polyolefin pre-arms are conventional.

As an alternative to the ethylene/maleic anhydride copolymers, use can also be made of the styrene/maleic anhydride copolymers, referred to as SMA polymers. Included as SMA polymers are those where the styrene in part may be substituted by other aryl olefins such as α-methyl styrene, vinyl naphthalene, alkyl styrenes, vinyl alkyl naphthalenes, halogen substituted styrenes, etc. In accordance with this concept of the invention, use can be made of copolymers containing 90 to 65 weight percent of styrene and 10 to 35 weight percent of maleic anhydride. Additionally, 5 to 15 weight percent of the maleic anhydride may be prereacted with simple amines such as ammonia, aniline, N-alkyl amines, alkyl substituted anilines to form the corresponding maleimide group in the SMA polymer. The SMA polymers useful in the practice of this invention can have a Mₙ of 500 to 55,000 (g/mol). Different polyolefin pre-arms, which have been functionalized to introduce a terminal hydroxy or amine group, can thus be coupled to the SMA polymers through coupling with the maleic anhydride groups to form an ester, amide, or imide linkage as described previously for the ethylene/maleic anhydride backbone.

Branched polymers similar to those just described can be prepared by use of α,β-unsaturated anhydrides such as maleic anhydride as a difunctional polymerizable monomer for reaction with different amine or hydroxy terminal polyolefin pre-arms. The amine or hydroxy groups react to provide new unsaturated polyolefin pre-arms with either an imide or an anhydride, ester bond. The unsaturation in the new pre-arms can be subjected to conventional free radical or anionic polymerization conditions either alone or with ethylene or styrene, to make copolymer backbones. Alternatively, other monomers copolymerizable with ethylene and/or styrene, for example acrylates and methacrylates, can be used to make a terpolymer backbone.

In accordance with a further embodiment of the invention, it is possible, and sometimes desirable to use, as the reactive polymeric backbone, partially hydrolyzed polymers of vinyl acetate. As is well known to those skilled in the art, vinyl acetate can be polymerized by means of a free radical polymerization mechanism to form polyvinyl acetate which can then be substantially or completely hydrolyzed using either acidic or basic conditions to remove acetyl groups pendant on the polymer backbone leaving pendant hydroxy groups. Typically, polyvinyl acetate can by hydrolyzed to the extent of 50 to 80 percent in the practice of the present invention. Thus, the polymer employed as the polymer backbone contains 50 to 80 percent alcohol groups and 50 to 20 percent vinyl acetate groups. Such products are commercially available from a variety of sources.

In one variation, the vinyl acetate-vinyl alcohol polymer employed as the reactive polymeric backbone in the practice of the present invention can be converted by reaction with a C₁-C₄ aliphatic aldehyde or ketone to form the corresponding acetal or ketal, respectively. Such reactions and the polymers produced therefrom are well known to those skilled in the art and are commercially available from a variety of sources. Such polymers are referred to as poly(vinyl acetals) or poly(vinyl ketals) and generally contain the structure: 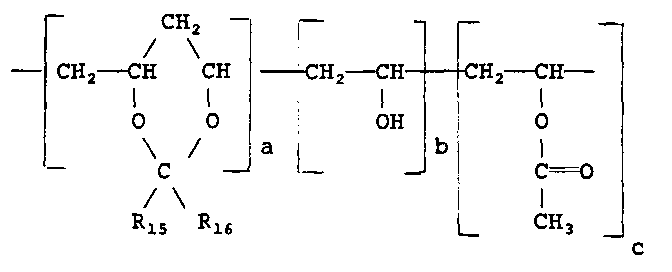 wherein R₁₅ and R₁₆ are each hydrogen or C₁-C₁₀ alkyl (e.g., methyl, ethyl, etc.). Commercially available poly(vinyl acetals) and poly(vinyl ketals) typically contain 75 to 95 percent by weight of the acetal (or ketal) (a), 6 to 25 percent by weight of vinyl alcohol (b) and 0 to 13 percent by weight of vinyl acetate (c). Those proportions are not critical to the practice of the present invention and, as will be appreciated by those skilled in the art, proportions outside those ranges can likewise be employed. While it is not critical to the practice of the invention, it is generally preferred that the polymer backbone used in this embodiment has a number average molecular weight Mₙ ranging from 1,000 to 40,000 (g/mol).

The polyolefin pre-arms herein can be coupled to polyvinyl alcohol/vinyl acetate or to poly(vinyl acetals/ketals) in combination with either the vinyl alcohol group or the vinyl acetate group by means of a variety of techniques. For example, use can be made of different polyolefin pre-arms which have been functionalized to introduce a carboxylic acid group as described above or the acid chloride group. When the polyolefin pre-arms have been functionalized in that way, the carboxyl group is capable of reacting with either the hydroxy functionality of the vinyl alcohol by way of an esterification reaction or with an acetate group of vinyl acetate by way of a transesterification reaction in accordance with conventional techniques.

Alternatively, use can be made of different polyolefin pre-arms which have been functionalized to introduce an ester group, such as a simple aliphatic ester or, as is sometimes preferred, an ester containing an ester leaving group such as a tosylate group or mesylate group. Such ester groups are likewise capable of reaction with either the acetate functionality or the hydroxy functionality of the reactive polymeric backbone, again in accordance with well known techniques.

Another technique by which the different polyolefin pre-arms can be coupled to the polyvinyl alcohol/acetate backbone is by a reaction sequence employing hydroxy functional polyolefin pre-arms. The (terminal) hydroxy groups of the polyolefin pre-arms are converted to tosylate groups by reactions with tosylchloride to generate a (terminal) tosyl group on the polyolefin pre-arm. That has the capability of reacting directly with the hydroxy functionality of the polyvinyl alcohol/acetate in the backbone to form the corresponding ether linkage or to undergo a transesterification reaction with the acetate group to form the corresponding ester linkage.

As an alternative technique one can couple different polyolefin pre-arms directly via a polymerization reaction by incorporation of difunctional polymerizable monomers in the form of vinyl isocyanates. In accordance with this embodiment, different amine or hydroxy terminal polyolefins are directly reacted with the vinyl isocyanate via the isocyanate functionality to provide new unsaturated polyolefin pre-arms with a urea, urethane bond. The unsaturations in these new pre-arms can be subjected to conventional free radical or anionic polymerization conditions either alone or in combination with other styrene-like or (meth)acrylate-like comonomers known to undergo such copolymerization reactions. Branched polymers as thus described can be exemplified by the following equation using styrene and methyl methacrylate as comonomers: 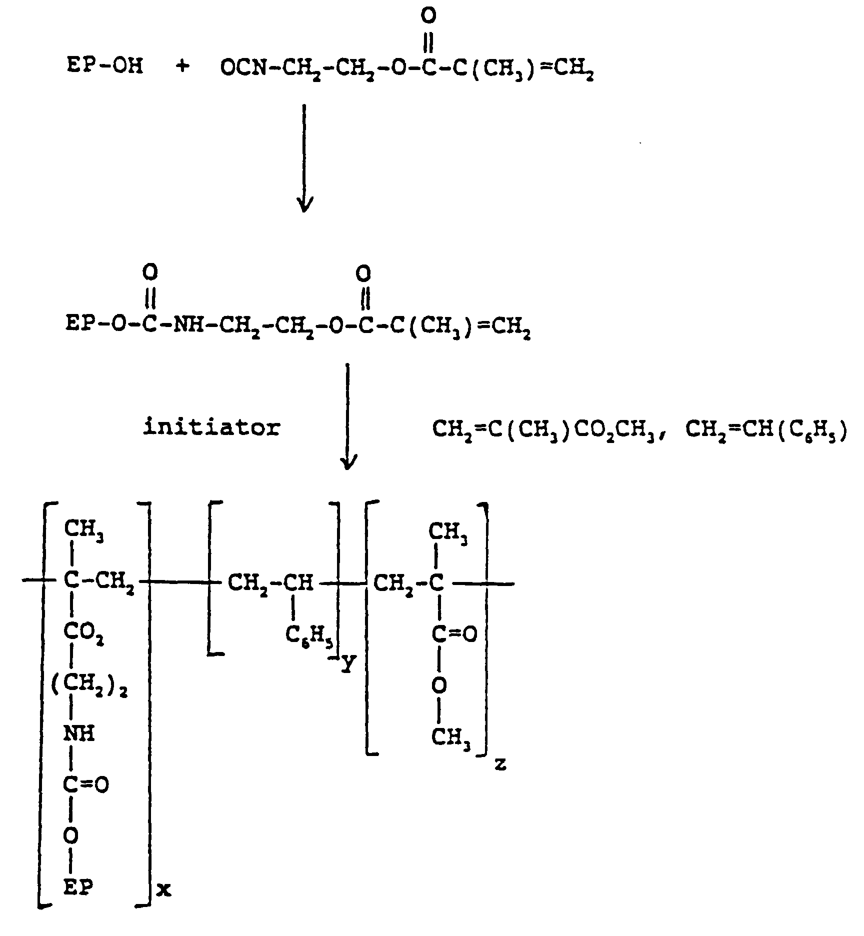 wherein x is 5 to 30 weight percent isocyanate derivatized polyolefin arm, y is 25 to 65 weight percent styrene and z is 30 to 70 weight percent methylmethacrylate.

In preparing the compatibilizer one has different options:
a) one can start from a blend of different polyolefin pre-arms and functionalize this blend, as a result of which different polyolefin pre-arms with the same functional group results;
b) one can make a blend of different functionalized polyolefin pre-arms, in which the respective functionalized pre-arms have been prepared in a previous step; in this option the different polyolefin pre-arms can have different functionalities;
c) in case the (terminal) unsaturation in the pre-arms is the functional group, the different pre-arms can be used as such.

In these cases the different polyolefin pre-arms are reacted with the polymeric backbone. The conditions for these reactions are similar to those described before for the coupling between the polymeric pre-arms with a (poly)hydrosilane.

Another, and preferred, alternative for preparing the desired compatilizer is by an in-situ process, wherein the respective different arms originate from the polyolefins which have to be compatibilized. The compatibilizer in this preferred alternative is prepared by mixing the ingredient designed to become the polymeric backbone with the different polyolefins to be compatibilized. It goes without saying that this alternative is effective only if the different polyolefins have functionalities which can react with the functionalities on the ingredient designed to become the backbone. This alternative is extremely suited in those situations where the polymeric backbones are polyhydrosilane polymers and copolymers, containing silicon-hydrogen bonds, as described before, and wherein the different polyolefins of the blend contain (terminal) C=C-bonds. In such a case the compatibilizer needed can be made directly out of the polyolefins to be compatibilized. This alternative is preferably done in bulk.

The invention also relates to compatibilized polyolefin blends. The blends are compatibilized by the compatibilizer of the present invention and as previously described.

The polyolefin which can be used in polyolefin blends of the present invention can be of a various nature. In some embodiments it is preferred, that the polyolefin contains terminal unsaturation in the form of either vinyl, vinylidene, vinylene, or mixtures thereof. Use can be made of polyolefin homopolymers, such as polyethylene, polypropylene, polystyrene and analogs thereof, but it is also possible, and sometimes preferred, to employ copolymers of one or more 1-alkenes or to employ copolymers of one or more 1-alkenes with other unsaturated monomers copolymerizable therewith. In general, use is made of copolymeric polyolefins based on ethylene and at least one other 1-alkene. In addition, it is also possible to use, in combination with one or more of the monomers described above, one or more polyenes which either may or may not be functionalized.

Suitable polyolefins as one or more components of the polyolefin blend of the present invention also include rubbery copolymers of 1-alkenes generally, and preferably ethylene/ propylene copolymers or copolymers of ethylene and propylene with other 1-alkenes, as well as copolymers formed by the interpolymerization of ethylene, 1-alkenes and at least one other polyene monomer. Such polymers are themselves well known to those skilled in the art and are typically prepared by using conventional Ziegler or metallocene polymerization techniques well known to those skilled in the art. Also the process as disclosed in WO 96/23010 is suitable. Both types of polymers hereinafter collectively are referred to as EP(D)M.

As will be appreciated by those skilled in the art, while propylene is a preferred monomer for copolymerization with ethylene and optionally a diene monomer, it will be understood that in place of propylene, use can be made of other 1-alkenes containing 4 to 20 carbon atoms. The use of such higher 1-alkenes together with or in place of propylene are well known to those skilled in the art and include, particularly, 1-butene, 1-pentene, 1-hexene and 1-octene.

When using an interpolymer of ethylene, 1-alkene and a polyene monomer, use can be made of a variety of polyene monomers known to those skilled in the art containing two or more carbon-to-carbon double bonds containing 4 to 20 carbon atoms, including non-cyclic polyene monomers, monocyclic polyene monomers and polycyclic polyene monomers. Representative of such compounds include 1,4-hexadiene, dicyclopentadiene, bicyclo(2,2,1)hepta-2,5-diene, commonly known as norbornadiene, as well as the alkenyl norbornenes wherein the alkenyl group contains 1 to 20 carbon atoms and preferably 1 to 12 carbon atoms. Examples of some of the latter compounds includes 5-methylene-2-norbornene, 5-ethylidene-2-norbornene, vinyl norbornene as well as alkyl norbornadienes.

The polyolefins in the blend according to the invention may be a combination of two (semi)crystalline polyolefins, a combination of a (semi-)crystalline polyolefin and a rubbery polyolefin, or a combination of two polyolefinic rubbers.

The skilled man is well capable of finding the right compatibilizer, given the intended blend of polyolefins to be compatibilized. The different polyolefinic arms of the compatibilizer are to be matched with the different polyolefins of the blend.

The amount of compatibilizer in the polyolefin blend is generally between 0.01 and 35, more preferably between 0.1 and 10 and even more preferred between 0.1 and 5 wt.%. Another possibility is the use of the compatibilizer as such, as the compatibilizer is a (chemically bonded) blend of polyolefins.

The blend of the present invention can also contain other additives, conventionally used in polyolefin compounds; examples are antioxidants, UV-stabilizers, colorants, carbon black.

## Claims

1. Branched polyolefin polymer comprising a plurality of polyolefin arms with different monomeric compositions selected from the group consisting of polymers of 1-alkenes linked to a polymer backbone, prepared by:
(a) coupling polyolefin pre-arms with a different monomer composition with a reactive polymeric backbone; or
(b) polymerization of polyolefin pre-arms with a different monomeric composition.

2. Branched polymer according to claim 1, characterized in that the reactive polymeric backbone contains 6 to 10 functional groups capable of undergoing reaction with the polyolefin pre-arms directly or through a coupling reaction.

3. Branched polymer according to anyone of claims 1-2, characterized in that the polyolefin pre-arms are polyolefin polymers derivatized at their terminus, whereby the polyolefin arms are reactive with the polymeric backbone or a difunctional polymerizable monomer.

4. Branched polymer according to anyone of claims 1-3, characterized in that the polyolefin pre-arms contain terminal unsaturation selected from the group consisting of vinyl unsaturation, vinylidene unsaturation and vinylene unsaturation.

5. Branched polymer according to anyone of claims 1-3, characterized in that the polyolefin pre-arms are derivatized to form coupling sites, selected from the group consisting of hydroxy, amino, peroxy, carboxylic acid, carboxylic acid ester, carboxylic acid halide, carboxylic acid anhydride, organoboron, cyano, isocyanato, thio, epoxy and aldehyde coupling groups, and then the derivatized polyolefin pre-arms are coupled with functional groups on the reactive polymeric backbone.

6. Branched polymer according to anyone of claims 1-3, characterized in that the polyolefin pre-arms are derivatized to form coupling sites selected from the group consisting of hydroxy, amino, peroxy, carboxylic acid, carboxylic acid ester, carboxylic acid halide, carboxylic acid anhydride, organoboron cyano, isocyanato, thio, epoxy and aldehyde coupling groups, and then the polyolefin pre-arms are coupled with a difunctional polymerizable monomer, and the monomer having the polyolefin arms bonded thereto is polymerized to form a polymeric backbone having polyolefin arms with a different monomeric composition attached thereto.

7. Branched polymer according to claim 1, characterized in that the reactive polymeric backbone is formed from a polyhydrosilane polymer or copolymer.

8. Branched polymer according to claim 7, characterized in that the polyhydrosilane polymer or copolymer is a silicon-containing polymer having repeating units of the general formula: 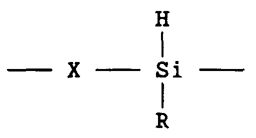 wherein X is a group containing a heteroatom or one or more carbon atoms forming part of a group selected from aliphatic groups and aromatic groups and R is hydrogen or an organic group.

9. Branched polymer according to claim 1, characterized in that the reactive polymeric backbone is a polyhydrosiloxane having the general formula: 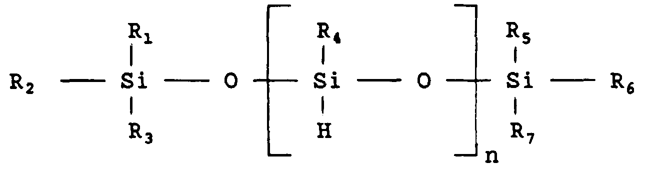 wherein R₁ to R₇ is each independently hydrogen or an organic group and n is an integer of at least 10.

10. Branched polymer according to anyone of claims 1-9, characterized in that the polyolefin pre-arms are different ethylene-propylene copolymers having terminal unsaturation.

11. Branched polymer according to claim 1 wherein the polyolefin pre-arms are a mixture of polyethylene and polypropylene having terminal unsaturation.

12. Branched polymer according to anyone of claims 1-11, characterized in that the polyolefin pre-arms are produced by polymerization with a metallocene catalyst system.

13. Branched polymer according to anyone of claims 1-12, characterized in that the polyolefin pre-arms have a number average molecular weight ranging between 1,000 and 80,000.

14. Branched polymer according to anyone of claims 1-13, characterized in that the molecular weight distribution of the polyolefin pre-arms range from 1.2 to 3.5.

15. Branched polymer according to anyone of claims 1-14, characterized in that the reactive polymeric backbone has a number average molecular weight of 1,000 to 40,000.

16. Compatibilized polyolefin blend, comprising a blend of polyolefins and a compatibilizer in the form of a branched polyolefin polymer according to anyone of claims 1-15.

17. Process for preparing a compatibilized polyolefin blend as according to claim 16, characterized in that different polyolefins are in-situ reacted with a reactive polymeric backbone.

18. Process according to claim 17, characterized in that the polymeric backbone is a polyhydrosilane polymer or copolymer, and the different polyolefins contain (terminal) C=C-bonds.

19. Process for preparing a branched polymer, characterized in that it comprises either a coupling reaction between a reactive polymeric backbone containing functionality capable of reaction with polyolefin pre-arms with a different monomeric composition or a polymerization reaction between polyolefin pre-arms with a different monomeric composition derivatized for such polymerization reactions.
